# EUROPÄISCHE PATENTSCHRIFT

(11) **EP 3 572 312 B1**
(45) Veröffentlichungstag und Bekanntmachung des Hinweises auf die Patenterteilung: **13.10.2021**
(21) Anmeldenummer: 18173857.6
(22) Anmeldetag: 23.05.2018
(51) Int. Cl.: B62K 21/22

(54) **ZENTRIERELEMENT UND STEUEREINRICHTUNG FÜR EIN FAHRRAD**
CENTRING ELEMENT AND STEERING DEVICE FOR A BICYCLE
ÉLÉMENT DE CENTRAGE ET DISPOSITIF DE DIRECTION POUR BICYCLETTE

(43) Veröffentlichungstag der Anmeldung: 27.11.2019
(73) Patentinhaber: Ghost-Bikes GmbH, 95652 Waldsassen (DE)
(72) Erfinder: Ackermann, Volker, 95643 Tirschenreuth (DE)
(74) Vertreter: V.O.

(56) Entgegenhaltungen:
- CN-A- 101 987 647
- CN-U- 207 374 591
- DE-U1-202016 101 573
- JP-U- S6 316 284
- US-A1- 2002 121 155

## Beschreibung

Vorliegende Erfindung betrifft ein Zentrierelement zur zentrierten Montage eines Lenker-Vorbaus auf einem Gabelschaft einer Vorderradgabel eines Fahrrades und zur Festlegung einer Orientierung des Lenker-Vorbaus relativ zur Fahrradlängsachse, der Vorbau umfassend eine Gabelschaftklemmung derart, dass er auf den Gabelschaft aufschiebbar und dort festklemmbar ist, wobei das Zentrierelement derart ausgebildet ist, dass es in den Innenraum des Gabelschaftes einführbar und dort in einem Lagersitz aufnehmbar ist, so dass es mit wenigstens einem Zentrierfortsatz vom Innenraum des Gabelschaftes zu dessen Außenseite und dort wenigstens teilweise in eine Zentrierausnehmung des Vorbaus ragt und dabei den Vorbau in seiner Ausrichtung relativ zum Gabelschaft justiert.

Vorliegende Erfindung betrifft zudem eine Steuereinrichtung für ein Fahrrad, umfassend einen Lenker-Vorbau mit einer Gabelschaftklemmung, der auf einen Gabelschaft einer Vorderradgabel eines Fahrrads aufschiebbar und dort festklemmbar ist.

Derartige Zentrierelemente und Steuereinrichtungen sind aus dem Stand der Technik bekannt. Zweitere erlauben die Montage eines Lenkers auf einer Vorderradgabel eines Fahrrads und mit diesem in bekannter Weise das Steuern des Fahrrads. Die Gabelschaftklemmung ist dabei so ausgeführt, dass sie eine Rotation des Lenker-Vorbaus um die Haupterstreckungsachse des Gabelschafts erlaubt. Dies ermöglicht zudem meist auch das Verdrehen des Lenkers zum Transport um 90°, was die Breite des Fahrrads bei montiertem Lenker deutlich reduziert.

Nachteilig bei bekannten Lenker-Vorbauten ist jedoch die genau Ausrichtung bzw. Justierung des Lenker-Vorbaus, insbesondere für den Fahrradbetrieb, derart, dass der Lenker-Vorbau genau in Fahrradlängsachse positioniert ist. Nur dann ergibt sich bei einem Standartvorbau ein genau im 90°-Winkel zur Fahrradlängsachse orientierter Lenker.

Die CN 101 987 647 A zeigt ein Metall-Klemmelement, das in das Innere eines Gabelschafts eingeklickt werden kann, und das mit einem Fortsatz aus dem Gabelschaft nach außen ragt. Das Klemmelement soll dazu dienen, ein Herunterrutschen des Vorbaus am Gabelschaft zu verhindern, wenn der Vorbau gelockert ist.

Die JP S63 16284 U3 zeigt eine Steuereinrichtung, bei der ein Lenker-Vorbau auf einen Gabelschaft einer Vorderradgabel eines Fahrrades aufschiebbar und dort festklemmbar ist, indem eine Schraube durch den Vorbau und eine komplementär dazu im Gabelschaft angeordnete Bohrung führbar und festschraubbar ist. Durch die Schraube wir der Vorbau Klemmfixiert und über die entsprechend angeordnete Bohrung in Fahrtrichtung ausgerichtet. Es ist seit langem bekannt, dass solche den Gabelschaft durchdringende Klemmfixierungen eine Querschnittsschwächung im biegebelasteten Bereich bewirken und daher unvorteilhaft sind. Eine Ausrichtung ist bei dieser Ausführungsform immer mit der Klemmfixierung verbunden, so dass insbesondere keine Höhenjustierung nach der Ausrichtung mehr möglich ist. Zudem kann eine Justierung nur mittels eines Werkzeuges erfolgen und erfordert zudem immer die manuelle und genaue Ausrichtung von Lenkervorbau und Gabelschaft, um die Schraubendurchführung in Deckung zu bringen, in die dann, unter Beibehaltung der Ausrichtung die Schraube eingeführt werden muss.

Die CN 207 374 591 U, die alle Merkmale des Oberbegriffs des unabhängigen Anspruch 1 offenbart, zeigt eine Lenkerbefestigung, bei der ein integral an einem Lenker ausgebildetes Lenkerrohr in einen Gabelschaft eingeführt und beide in einem Steuerrohr des Rahmens befestigt werden. Diese Befestigung erfolgt über eine Steuerkopfanordnung, umfassend eine Überwurfmutter, die am Lenkerrohr befestigt ist, und eine Lagerschale, die am Gabelschaft befestigt ist. Beide sind drehgelagert am Steuerrohr festlegbar. In das Lenkerrohr ist eine Feder einsetzbar, umfassend zwei Arretierungsfortsätze, die beim Einschieben des Lenkers in den Gabelschaft in vertikal übereinander angeordnete Arretierungsöffnungen am Gabelschaft eingreifen, und so den Lenker relativ zum Gabelschaft fixieren. Diese Ausführung erlaubt keine freie Fixierung des Lenkers an einem geklemmten Lenkervorbau, beispielsweise einem Ahead-Vorbau.

Es besteht also der Bedarf, eine einfache und verlässliche Justiermöglichkeit für einen klemmbaren Lenker-Vorbau zu schaffen, um insbesondere eine genau Ausrichtung eines daran montierten Lenkers insbesondere für den Fahrbetrieb zu garantieren.

Diese Aufgabe wird durch ein Zentrierelement gemäß Anspruch 1, eine Steuereinrichtung gemäß Anspruch 2, und ein Fahrrad gemäß Anspruch 12 gelöst.

In diesem Zusammenhang wird eine Montageschablone vorgeschlagen, die nicht Gegenstand der beanspruchten Erfindung ist, zur Montage eines Zentrierelements, wie es hier beschrieben ist, in einem Gabelschaft einer Vorderradgabel und/oder zur Montage einer Steuereinrichtung wie sie hier beschrieben ist auf einem Gabelschaft einer Vorderradgabel, umfassend ein Hülsenelement, dessen Innengeometrie komplementär zur Außengeometrie des Gabelschafts ausgebildet und/oder auf diesen einstellbar ist und das über den Gabelschaft stülpbar ist und auf einem bestimmten Höhenniveau einstellbar ist, wobei wenigstens eine Bohrschablone vorgesehen ist, zum Einsetzen eines Bohrers oder dergleichen Ausnehmewerkzeug, um im Gabelschaft wenigstens einen Lagersitz auszubilden.

Kern der Erfindung ist die Ausrüstung einer Steuereinrichtung mit einem bzw. das Zurverfügungstellen wenigstens eines Zentrierfortsatzes, der arretierend in die Zentrierausnehmung des Vorbaus ragt und den Vorbau so in seiner Ausrichtung relativ zum Gabelschaft justiert. Durch eine genau definierte Ausrichtung des Zentrierfortsatzes relativ zur Gabellängsachse, zum Gabelschaft etc. ist auf diese Weise eine verlässliche Orientierung des Lenker-Vorbaus relativ zur Fahrradlängsachse möglich. Dabei gilt, dass das Zentrierelement und dessen wenigstens einer Zentrierfortsatz so ausgebildet und in einem entsprechend ausgebildeten Lagersitz an dem Gabelschaft aufgenommen ist, dass es beim Einragen in den Vorbau diesen in der geforderten Ausrichtung justiert. Eine solche Ausrichtung kann beispielsweise eine Fahrbetriebsposition sein, in der der Lenker-Vorbau derart in Bezug auf die Fahrradlängsachse ausgerichtet bzw. justiert ist, dass ein daran befestigter Lenker orthogonal dazu verläuft. Eine weitere Justierposition kann beispielsweise eine Transportposition sein, in der der Lenker im Wesentlichen in Fahrradlängsachse verläuft (bei entlang der Fahrradlängsachse verlaufendem Vorderrad).

Der Lenker kann integral am Vorbau ausgebildet sein. Der Vorbau kann auch derart ausgebildet sein, dass daran ein Lenker befestigbar und insbesondere festklemmbar ist.

Optional ist die Gabelschaftklemmung derart ausgebildet, dass sie einen Klemmspalt aufweist, der als Zentrierausnehmung fungiert. In diesen Klemmspalt ragt optional also der wenigstens eine Zentrierfortsatz ein, sobald sich der Lenker-Vorbau in der gewünschten Justierposition befindet. Optional ist dieser Klemmspalt als variabler Klemmspalt ausgebildet, beispielsweise um den Innendurchmesser der Gabelschaftklemmung zu reduzieren und so den Lenker-Vorbau auf dem Gabelschaft festzuklemmen. Optional weist die Zentrierausnehmung und insbesondere der Klemmspalt eine (Quer-)Breite, also ein Spaltmaß, von 1-5mm, weiter optional ein Spaltmaß von 2-3 mm auf, und insbesondere im Zustand in dem der Lenker-Vorbau auf dem Gabelschaft festgeklemmt ist. Optional ist die Zentrierausnehmung und insbesondere der Klemmspalt in seiner Querbreite weniger breit als der Zentriervorsatz gemessen in Richtung dieser Querbreite.

Optional ist der Zentrierfortsatz in seiner Geometrie komplementär zu diesem Klemmspalt ausgebildet. Optional ist der Zentrierfortsatz so ausgebildet, dass er spielfrei in dem Klemmspalt bzw. einer entsprechenden Zentrierausnehmung justierend aufgenommen ist bzw. werden kann.

Optional wird der Lagersitz im Gabelschaft durch wenigstens eine Ausnehmung, insbesondere eine Bohrung im Gabelschaft gebildet, und insbesondere eine Radialbohrung, also eine radial zum Gabelschaft verlaufende Bohrung. Der Lagersitz und/oder die Zentrierausnehmung sind optional derart ausgebildet, dass, betrachtet entlang der Haupterstreckungsachse As des Gabelschaftes, der Zentriervorsatz im Bereich der oberen Hälfte des Vorbaus in die Zentrierausnehmung einragt, wenn der Vorbau in einer geforderten Ausrichtung justiert ist.

Optional ist wenigstens ein Zentrierfortsatz komplementär zur Ausnehmung bzw. Bohrung ausgebildet, sodass er die Ausnehmung vom Innenraum des Gabelschafts zu dessen Außenseite durchdringt. Optional sind wenigstens zwei gegenüberliegende Ausnehmungen vorgesehen, sodass u.a. eine sichere Lagerung des Zentrierelements über Zentrierfortsätze, die in den Ausnehmungen vorhanden sind, gewährleistet ist. In diesem Zusammenhang sind optional wenigstens zwei Zentrierfortsätze vorgesehen, die ebenfalls optional gegenüberliegend ausgebildet sind. Auch ist es denkbar, eine Mehrzahl an Ausnehmungen vorzusehen und insbesondere Ausnehmungen, die um 90° versetzt zueinander im Gabelschaft angeordnet sind, um so beispielsweise eine Fahrbetriebsposition und eine Transportposition zur Justierung des Vorbaus zu definieren. Optional kann die wenigstens eine bzw. können die Ausnehmungen den Lagersitz bilden

Aus dem Stand der Technik ist es bekannt, im Gabelschaft eine Einschlagmutter oder dergleichen Befestigungselement vorzusehen, um damit eine Abdeckkappe des Lenker-Vorbaus zu befestigen. Optional ist es insbesondere in diesem Zusammenhang vorgesehen, dass der Lagersitz in Bezug auf die Haupterstreckungsachse des Gabelschafts oberhalb dieses Befestigungsmittels ausgebildet wird, sodass das Zentrierelement von oben in den Gabelschaft eingesetzt werden kann. Hier ist es möglich, das Zentrierelement so auszubilden, dass es auf dem Befestigungselement im Gabelschaft aufliegt.

U.a. zur Ausbildung der Ausnehmung im Gabelschaft ist optional die zuvor beschriebene Montageschablone vorgesehen, die das ausgerichtete Einbringen der Ausnehmung in den Gabelschaft erlaubt. Diese Montageschablone kann eine oder mehrere Bohrschablonen aufweisen, um an der gewünschten Position am Gabelschaft und insbesondere entlang des Umfangs des Gabelschafts an einer gewünschten Höhenposition bzw. einem gewünschten Höhenniveau wenigstens eine Ausnehmung in den Gabelschaft einzubringen.

In Bezug auf das Zentrierelement ist optional wenigstens ein Zentrierfortsatz in Bezug auf den Gabelschaft radial verlaufend ausgebildet. Auf diese Weise kann er bei eingesetztem Zentrierelement einfach durch die zuvor genannte Ausnehmung geführt werden, sodass er von der Innenseite zur Außenseite des Gabelschafts ragt.

Optional ist es denkbar, dass wenigstens ein Teil des Zentrierfortsatzes entlang seiner Längsachse A_{ZL} elastisch zwischen einer Freigabestellung und einer Justierstellung verschieblich ausgebildet ist. Insbesondere ist es denkbar, dass durch einen entlang der Längsachse A_{ZL} aufgebrachten Druck, wirkend von der Außenseite zur Innenseite, der Zentrierfortsatz von einer Justierstellung in die Freigabestellung gedrängt werden kann. Auch ist es denkbar, den Zentrierfortsatz als Teil eines Schnappverschlusses bilden, der automatisch das Freigeben der Arretierung bzw. Justierstellung des Lenker-Vorbaus ermöglicht, sobald (bei geöffneter Gabelklemmung) eine Rotationskraft auf den Lenker-Vorbau einwirkt. Hier ist optional eine komplementäre Ausbildung eines freien Endes des Zentrierfortsatzes derart denkbar, dass er bei der Rotation des Lenker-Vorbaus um die Gabelschaftachse insbesondere von der Gabelklemmung und insbesondere Randbereichen der Zentrierausnehmung entlang seiner Längsachse A_{ZL} von der Justierstellung in die Freigabestellung gedrängt wird.

Wie erwähnt ist wenigstens ein Federelement vorgesehen, das mit wenigstens einem Zentrierfortsatz in Kraftkopplung steht. Gegen eine bzw. nach Überschreiten einer Aktivierungskraft, entsprechend der Federkraft, ist auf diese Weise der Zentrierfortsatz insbesondere axial, optional aber auch in andere Richtungen, verschiebbar ausgebildet. Das Federelement spannt den Zentrierfortsatz elastisch in eine Justierstellung vor. Auf diese Weise kann unter anderem ein automatisches Justieren des Zentrierfortsatzes erfolgen, insbesondere sobald der Lenker-Vorbau in der Justierstellung angeordnet ist. Ein federvorgespannter Zentrierfortsatz kann dann in die wenigstens eine Zentrieraufnahme bzw. den Klemmspalt Eingleiten und so den Lenker-Vorbau justieren.

Optional weist wenigstens ein Zentrierfortsatz an seinem zur Außenseite ragenden freien Ende einen, entlang der Längsachse A_{ZL} nach außen betrachtet, in seinem Durchmesser abnehmenden Kopfbereich auf. Optional ist dieser Kopfbereich abgerundet und insbesondere als Halbkugel, als Pyramide oder dergleichen Kuppe geformt. Weiter optional ist der Durchmesser des Kopfbereichs in einem Fußbereich größer als die maximale Breite der Zentrierausnehmung und/oder in einem freien Endbereich geringer als die Minimalbreite der Zentrierausnehmung. Optional weist der Zentriervorsatz einen Durchmesser von 3-6mm auf, weiter optional 4-5 mm. Optional wird sichergestellt, dass der Zentrierfortsatz spielfrei in der Zentrierausnehmung aufgenommen ist. Darüber hinaus und wie bereits erwähnt ist es insbesondere mit zuvor erwähnten Ausbildungen des freien Endes möglich, den Lenker-Vorbau derart auszubilden, dass der Zentrierfortsatz beim Aufbringen einer Rotationslösekraft wirkend auf den Vorbau und um den Gabelschaft, also ein um den Gabelschaft wirkendes Drehmoment, die Justierstellung freigibt und in die Freigabestellung zurückgedrängt wird.

Darüber hinaus erlaubt die elastische Ausbildung des wenigstens einen Zentrierfortsatzes das Einsetzen des Zentrierelements in den Innenraum des Gabelschafts unter radialem Zurückdrängen des Zentrierfortsatzes.

Optional ist das Zentrierelement in seiner Außengeometrie wenigstens abschnittsweise komplementär zur Innengeometrie des Gabelschafts ausgebildet. Auf diese Weise kann zusätzlich zur Lagerung des Zentrierelements über den wenigstens einen Zentrierfortsatz ein Lagersitz durch die Außengeometrie bzw. das Zusammenwirken der Außengeometrie des Zentrierelements mit der Innengeometrie des Gabelschafts insbesondere in horizontaler Richtung sichergestellt werden.

Optional ist das Zentrierelement ein Gusselement. Weiter optional ist das Material elastisch ausgebildet. Optional ist der Zentriervorsatz aus einem Material hergestellt, das gegenüber dem Material der Zentrierausnehmung einen geringfügig geringeren Abrasiv-Widerstand aufweist. Auf diese Weise wird sichergestellt, dass beim Justieren und De-Justieren des Vorbaus ein Verschleiß primär am insbesondere austauschbar ausgeführten Zentrierelement auftritt und weniger an der Zentrierausnehmung und insbesondere am Vorbau auftritt.

Optional weist das Zentrierelement eine Scheibengeometrie auf, optional wenigstens abschnittsweise mit einer ringförmigen Außengeometrie. Auf diese Weise kann das Zentrierelement auch bei geringem Platzbedarf zwischen Befestigungsmittel im Gabelschaft und freiem Ende des Gabelschafts in den Gabelschaft eingesetzt werden. Die ringförmige Außengeometrie erlaubt darüber hinaus die Ausbildung der zuvor erwähnten Zentralausnehmung.

Optional weist das Zentrierelement eine Außengeometrie mit wenigstens einem Stegelement auf, an dem wenigstens ein Zentrierfortsatz angeordnet ist. Optional weist das Zentrierelement eine Außengeometrie mit konkaven Stegelementen und konvexen Stegelementen auf, die optional im Wechsel ausgebildet sind. Auf diese Weise wird auch eine komplementäre Ausbildung der Außengeometrie des Zentrierelements und der Innengeometrie des Gabelschafts ermöglicht. Darüber hinaus erlaubt eine solche Ausbildung, insbesondere in Verbindung mit elastischem Material, die Ausbildung von Federelementen, wie sie zuvor beschrieben wurden. Optional ist der Zentrierfortsatz derart ausgebildet, dass beim radialen Zurückdrängen des Zentrierfortsatzes, eine Biegung im Stegelement resultiert. Bei der Ausbildung des Zentrierelementes aus einem elastischen Material resultiert so eine federelastische Wirkung.

Wie bereits erwähnt, betrifft die Erfindung eine Steuereinrichtung, ein Zentrierelement und ein Fahrrad. Aus Redundanzgründen sei angemerkt, dass alle hier erwähnten Vorteile und Ausführungsformen einer Steuereinrichtung identisch für das Zentrierelement und das Fahrrad gelten und umgekehrt.

Weitere Ausführungsformen der Erfindung ergeben sich aus den Unteransprüchen. Im Folgenden wird die Erfindung anhand von Ausführungsbeispielen erläutert, die in den beiliegenden Zeichnungen dargestellt sind. Hierbei zeigen:
- Fig. 1: eine axonometrische Darstellung einer Ausführungsform des erfindungsgemäßen Fahrrads in einer Fahrbetriebsstellung;
- Fig. 2: eine Detailansicht einer Ausführungsform der erfindungsgemäßen Steuereinrichtung insbesondere für ein Fahrrad gemäß Fig. 1;
- Fig. 3: eine Detailansicht einer weiteren Ausführungsform der erfindungsgemäßen Steuereinrichtung insbesondere für ein Fahrrad gemäß Fig. 1;
- Fig. 4: eine Detailansicht einer Ausführungsform der erfindungsgemäßen Steuereinrichtung in einer Freigabestellung;
- Fig. 5: eine Detailansicht der Ausführungsform gemäß Fig. 4 der erfindungsgemäßen Steuereinrichtung in einer Justierstellung;
- Fig. 6: eine axonometrische Darstellung einer Ausführungsform des erfindungsgemäßen Fahrrads in einer Transportstellung;
- Fig. 7: eine Detailansicht einer weiteren Ausführungsform der erfindungsgemäßen Steuereinrichtung insbesondere für ein Fahrrad gemäß Fig. 6;
- Fig. 8: eine Detailansicht einer weiteren Ausführungsform der erfindungsgemäßen Steuereinrichtung insbesondere für ein Fahrrad gemäß Fig. 6; und
- Fig. 9: eine Ausführungsform der erfindungsgemäßen Montageschablone.

Im Folgenden werden für gleiche und gleich wirkende Bauteile dieselben Bezugsziffern verwendet, wobei zur Unterscheidung bisweilen Hochindizes ihre Anwendung finden.

Wenn nicht anders definiert, haben alle hier verwendeten Termini (einschließlich technischer und wissenschaftlicher Termini) die gleiche Bedeutung, und insbesondere eine Bedeutung, wie sie allgemein von einem Durchschnittsfachmann auf diesem Gebiet verstanden wird, wenn sie im Zusammenhang mit der Beschreibung und den Zeichnungen interpretiert werden. Es versteht sich ferner, dass Termini, wie diejenigen die in allgemein verwendeten Wörterbüchern definiert sind, in Bezug auf das hier besprochene technische Gebiet interpretiert werden, und nicht in einem idealisierten oder in einem übertrieben formalen Sinn, außer dies ist explizit so definiert. In bestimmten Fällen kann auf eine detaillierte Beschreibung allseits bekannter Vorrichtungen und Verfahren verzichtet werden, um Redundanz der Beschreibung zu vermeiden. Die Beschreibung bestimmter Ausführungsformen und die darin verwendete Terminologie soll die Erfindung nicht einschränken. Die Singularformen "ein", "der/die/das" mögen auch die Pluralformen mit einschließen, wenn es der Kontext nicht eindeutig anders nahelegt. Der Ausdruck "und/oder" schließt jegliche und alle Kombinationen eines oder mehrerer der zugehörigen aufgelisteten Gegenstände mit ein. Es versteht sich, dass die Begriffe "umfasst" und/oder "umfassend" das Vorhandensein genannter Merkmale angibt, jedoch das Vorhandensein oder das Hinzufügen eines oder mehrerer anderer Merkmale nicht ausschließt. Ferner versteht es sich, dass wenn ein bestimmter Schritt eines Verfahrens als einem anderen Schritt folgend angegeben wird, er direkt auf diesen anderen Schritt folgen kann oder einer oder mehrere Zwischenschritte durchgeführt werden können, bevor der bestimmte Schritt ausgeführt wird, wenn das nicht anders angegeben ist. In der gleichen Weise versteht es sich, dass wenn eine Verbindung zwischen Strukturen oder Komponenten beschrieben ist, diese Verbindung direkt oder über Zwischenstrukturen oder -komponenten erfolgen kann, außer es ist anderweitig spezifiziert. Auf den Offenbarungsgehalt aller Publikationen, Patentanmeldungen, Patente und anderer hier erwähnter Literatur wird in seiner Gänze verwiesen. Im Fall eines Konflikts gilt die vorliegende Spezifikation, einschließlich ihrer Definitionen.

Die Erfindung wird hier anhand der beiliegenden Zeichnungen beschrieben, in denen Ausführungsformen der Erfindung gezeigt sind. Die Erfindung kann jedoch auch in vielen verschiedenen Formen ausgeführt sein und sollte nicht so verstanden werden, dass sie auf die hier dargelegten Ausführungsformen eingeschränkt ist. Vielmehr sind diese Ausführungsformen hier angegeben, damit die vorliegende Offenbarung gründlich und vollständig ist und den Umfang der Erfindung dem Fachmann in vollständiger aber beispielhafter Weise darlegt. Die Beschreibung der beispielhaften Ausführungsformen soll im Zusammenhang mit den beiliegenden Zeichnungen gelesen werden, die als Teil der ganzen schriftlichen Beschreibung gelten sollen. In den Zeichnungen kann es vorkommen, dass die absoluten und relativen Größen von Systemen, Komponenten, Schichten und Bereichen aus Gründen der Deutlichkeit übertrieben dargestellt sind. Ausführungsformen können anhand schematischer und/oder querschnittsartiger Illustrationen, idealisierter Ausführungsformen und Zwischenstrukturen der Erfindung beschrieben sein. Relative Termini sowie auch ihre Ableitungen sollten so verstanden werden, dass sie sich auf die Ausrichtung beziehen, wie sie dort in der gerade besprochenen Zeichnung beschrieben oder gezeigt ist. Diese relativen Termini dienen der übersichtlicheren Beschreibung und erfordern nicht, dass das System in einer bestimmten Ausrichtung aufgebaut oder betrieben werden muss, außer es ist explizit anders angegeben.

Aus Gründen der Klarheit und im Sinne einer stringenten Beschreibung werden Merkmale hier meist als ein Teil einer oder getrennter Ausführungsformen beschrieben; es versteht sich jedoch von selbst, dass der Umfang der Erfindung auch Ausführungsformen enthalten kann, die Kombinationen aller oder einiger der beschriebenen Merkmale aufweisen.

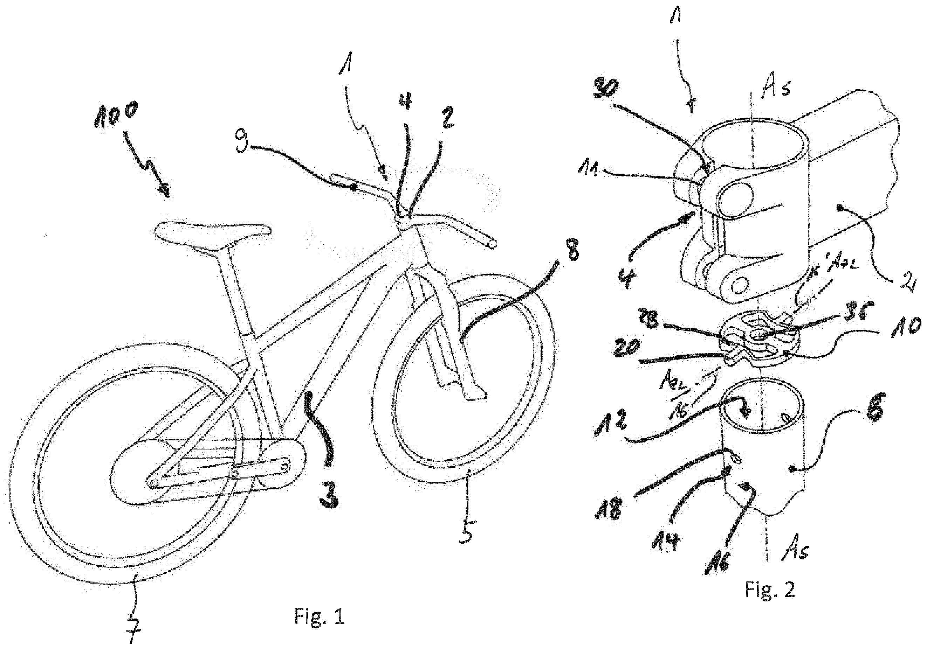

Fig. 1 zeigt eine axonometrische Darstellung einer Ausführungsform des erfindungsgemäßen Fahrrads 100 mit einer Ausführungsform der erfindungsgemäßen Steuereinrichtung 1. Das Fahrrad 100 weist einen Rahmen 3 auf, der der Aufnahme eines Vorderrads 5 und eines Hinterrads 7 dient. Das Vorderrad 5 wird in einer Vorderradgabel 8 aufgenommen, die (siehe insbesondere Fig. 2) einen Gabelschaft 6 aufweist. Auf dem Gabelschaft 6 ist ein Lenker-Vorbau 2 vorgesehen, der eine Gabelschaftklemmung 4 aufweist, mit der er auf den Gabelschaft 6 aufschiebbar und dort festklemmbar ist. Dazu weist der Lenker-Vorbau 2 bzw. die Gabelschaftklemmung 4 Klemmmittel, beispielsweise wenigstens eine Schraube 11 auf, die derart ausgebildet ist, dass sie beim Festziehen in einem Klemmsitz und insbesondere einem Gewinde eine Reduktion und entgegengesetzt, beim Lösen, eine Erweiterung eines Klemmspalts 30 bewirkt und so das Festklemmen auf dem bzw. Lösen vom Gabelschaft 6 erlaubt. Über diese Ausbildung kann der Lenker-Vorbau auf dem Gabelschaft montiert und ein daran befestigter bzw. befestigbarer Lenker 9 ausgerichtet werden.

Erfindungsgemäß ist weiter ein Zentrierelement 10 vorgesehen, das derart ausgebildet ist, dass es in einen Innenraum 12 des Gabelschafts 6 einführbar und dort in einem Lagersitz 14 aufnehmbar ist. Zentrierelement 10 und Lenker-Vorbau 2 bilden u.a die Steuereinrichtung 1. Optional kann am Lenker-Vorbau der Lenker 9 angeordnet bzw. ausgebildet sein.

Der Lagersitz 14 wird hier optional durch eine und im Detail optional zwei Ausnehmungen 18 und insbesondere Bohrungen, im Gabelschaft 6 gebildet.

Das Zentrierelement 10 weist wenigstens einen Zentrierfortsatz 20, bei diesem Beispiel wenigstens zwei Zentrierfortsätze 20 auf, die derart ausgebildet und insbesondere komplementär zum Lagersitz 14 bzw. den Ausnehmungen 18 ausgebildet sind, dass sie bei eingesetztem Zentrierelement 10 vom Innenraum 12 des Gabelschafts zu dessen Außenseite 16 ragen. Der wenigstens eine Zentrierfortsatz 20 ist darüber hinaus so ausgebildet, dass er von der Innenseite 12 zur Außenseite 16 des Gabelschafts und in eine Zentrierausnehmung 30 des Vorbaus 2 ragt, wenn der Vorbau in einer Justierposition angeordnet ist. In dieser Stellung wird der Vorbau 2 durch den einragenden Zentrierfortsatz 20 in seiner Ausrichtung relativ zum Gabelschaft 6 justiert. Über die definierte Anordnung des Lagersitzes und insbesondere der wenigstens einen Ausnehmung 18 am Gabelschaft kann auf diese Weise eine genaue Justierposition für den Vorbau 2 (und optional den daran befestigten Lenker 9) definiert werden. Wie bereits erwähnt, können durch unterschiedlich angeordnete Ausnehmungen insbesondere entlang des Umfangs des Gabelschafts unterschiedliche Positionen und insbesondere eine Justierposition für den Fahrbetrieb und eine Justierposition für den Transportbetrieb festgelegt werden. Der Lenker-Vorbau ist dabei optional derart ausgebildet, dass er in der definierten Position mit wenigstens einer Zentrierausnehmung 30 mit dem wenigstens einen Zentrierfortsatz 20 in Kopplung steht und von diesem justiert wird.

Diese Justierung kann eine Arretierung der Rotierbarkeit bzw. Bewegbarkeit des Lenker-Vorbaus in wenigstens einer Justierposition bewirken, es ist aber auch möglich, lediglich ein für den Nutzer des Fahrrads und insbesondere für einen Nutzer, der den Lenker-Vorbau auf dem Gabelschaft bewegt, haptisches oder dergleichen Feedback, beispielsweise ein akustisches Feedback etc. zu geben, um zu signalisieren, dass man sich in der Justierposition oder außerhalb der Justierposition befindet.

Bei der Ausführungsform gemäß Fig. 2 sind optional wenigstens zwei gegenüberliegende Ausnehmungen 18 vorgesehen, die komplementär zu zwei gegenüberliegenden Zentrierfortsätzen 20 ausgebildet sind. Nach dem Einsetzen des Zentrierelements 10 in den Innenraum 12 des Gabelschafts 6 ragen die Zentrierfortsätze 20 gegenüberliegend vom Innenraum 12 zur Außenseite 16 des Gabelschafts 6 und optional darüber hinaus, wenn sie nicht durch eine Innenwand der Gabelschaftklemmung 4 zurückgedrängt werden.

Insbesondere in diesem Zusammenhang ist wenigstens ein Zentrierfortsatz 20 derart ausgebildet, dass er bei eingesetztem Zentrierelement 10 von der Außenseite 16 des Gabelschafts 6 hervorsteht, wenn er nicht durch eine Innenwand der Gabelschaftklemmung 4 zurückgedrängt wird.

Optional, und wie beispielsweise hier gezeigt, ist ein wenigstens ein Zentrierfortsatz 20 in Bezug auf den Gabelschaft 6 und insbesondere dessen Haupterstreckungsachse As radial angeordnet.

Optional ist darüber hinaus wenigstens ein Teil des Zentrierfortsatzes 20 des Zentrierelements 10 entlang seiner Längsachse A_{ZL} elastisch zwischen einer Freigabestellung und einer Justierstellung verschieblich ausgebildet. Dies ist in Fig. 2 durch den Pfeil 16 dargestellt.

Insbesondere ist es bei einer solchen Ausführungsform möglich, durch das Eindrücken der Zentrierfortsätze 20 in Radialrichtung, also parallel zur Achse A_{ZL} die Außenabmessung des Zentrierelements so zu reduzieren, dass das Zentrierelement 10 in den Innenraum 12 des Gabelschafts 6 eingesetzt werden kann.

Darüber hinaus ist, wie im Folgenden noch im Detail beschrieben, durch diese verschiebliche Anordnung das Bewegen des Lenker-Vorbaus 2 von einer Freigabestellung in eine Justierposition und umgekehrt möglich.

Wie in Fig. 2 dargestellt, weist das Zentrierelement 10 wenigstens ein Federelement 28 auf, das mit wenigstens einem Zentrierfortsatz 20 in Kraftkopplung steht, und den Zentrierfortsatz 20 elastisch in eine Justierstellung vorspannt. Dies ist bei diesem Beispiel optional durch die Ausbildung des Zentrierelements 10 aus einem elastischen Material und/oder als ein Stegelement gegeben. Durch axiales Beaufschlagen des Zentrierfortsatzes 20 mit einer Kraft bewegt sich das Federelement 28, sodass es zu einer vorzugsweise elastischen Verschiebung des Zentrierfortsatzes 20 kommt. Dabei ist der Zentrierfortsatz 20 derart ausgebildet, dass er in die Justierstellung vorgespannt ist. Optional ragt er so im eingesetzten Zustand im Gabelschaft 6 bzw. dessen Innenraum 12 durch die Ausnehmung 18 über die Außenseite 16 heraus. Nach dem Aufsetzen des Lenker-Vorbaus 2 auf dem Gabelschaft 6 und dem Einragen des Zentrierfortsatzes 20 in die Zentrierausnehmung 30 kann der Lenker-Vorbau 2 auf dem Gabelschaft 6 justiert festgeklemmt werden. Wie aus dem Stand der Technik bekannt, ist dann eine weitere Fixierung durch ein Axialbefestigungsmittel (nicht dargestellt) des Vorbaus möglich, das durch eine Zentralausnehmung 36 des Zentrierelements 10 hindurchführbar und mit einem Montagemittel (nicht dargestellt) im Gabelschaft 6 befestigt werden kann. Ein solches Montagemittel ist beispielsweise eine Einschlagmutter.

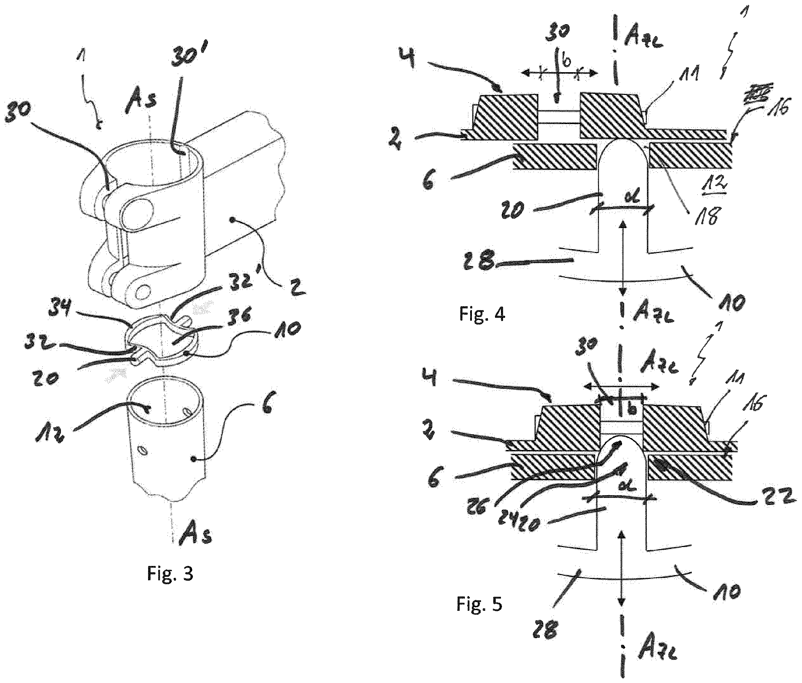

Fig. 3 zeigt eine weitere Ausführungsform der erfindungsgemäßen Steuereinrichtung, die im Wesentlichen der Ausführungsform gemäß Fig. 2 entspricht. Allerdings weist hier das Zentrierelement 10 eine anders ausgebildete Zentralausnehmung 25 auf. Weiter sind jedoch optional wieder zwei gegenüberliegende Zentrierfortsätze 20 vorgesehen, die elastisch verschieblich am Zentrierelement 10 gelagert sind. Wie auch bei der Ausführungsform zuvor, kann das Zentrierelement eine Außengeometrie mit Stegelementen und insbesondere konkaven Stegelementen 32 und konvexen Stegelementen 34 aufweisen. Bei dieser Ausführungsform ist es dann möglich, dass die konkaven und konvexen Stegelemente 32, 34 optional im Wechsel angeordnet sind. Auch ist es denkbar, weitere Stegelemente zwischen den konkaven und konvexen Stegelementen anzuordnen.

Auch ist es denkbar und exemplarisch hier dargestellt, dass das Zentrierelement 10 eine Scheibengeometrie aufweist und/oder optional wenigstens abschnittsweise mit einer ringförmigen Außengeometrie ausgebildet ist. Wie auch in Fig. 3 dargestellt, ist es möglich, dass das Zentrierelement 10 in seiner Außengeometrie wenigstens abschnittsweise komplementär zur Innengeometrie des Gabelschafts 6 ausgebildet ist. Dies wird hier optional durch die entsprechend ausgebildeten konvexen Stegelemente 34 erreicht, die komplementär zur Innengeometrie des Gabelschafts 6 ausgebildet sind.

Bei dieser Ausführungsform kann eine Zentrierausnehmung 30 mittels eines Klemmspalts 30 ausgeführt sein, der optional auch als variabler Klemmspalt 30 ausgeführt ist. Eine weitere Zentrierausnehmung 30' ist durch eine Ausnehmung auf der optional gegenüberliegenden Seite der Gabelschaftklemmung 4 des Lenker-Vorbaus 2 ausgeführt. Diese Zentrierausnehmung 30 kann als Ausnehmungsnut oder dergleichen Freiraum ausgebildet sein.

Grundsätzlich ist die Ausbildung einer Zentrierausnehmung, die sich wenigstens in einem bestimmten Bereich parallel zur Axialrichtung der Gabelschaftachse As erstreckt denkbar. Somit ist es möglich, den Vorbau 2 über eine gewissen Bereichen höhenverstellbar auszubilden. Eine solche Vorbaumontagehöhe kann, wie aus dem Stand der Technik bekannt, u.a. mittels Spacern eingestellt werden.

Auch ist es denkbar, wenigstens eine Zentrierausnehmung 30 auch an anderen Positionen innerhalb der Gabelschaftklemmung 4 und insbesondere entlang des Umfangs versetzt auszubilden, beispielsweise in einem 90°-Winkel versetzt.

Die Figuren 4 und 5 zeigen eine weitere Ausführungsform der Steuereinrichtung bzw. des Zentrierelements im Detail, und zwar in einer Freigabestellung (Fig. 4) und einer Justierstellung (Fig. 5).

Dargestellt ist im Schnitt ein Teil des Gabelschafts 6, der Gabelschaftklemmung 4, des Lenker-Vorbaus 2 und des Zentrierelements 10. Das Zentrierelement 10 weist wenigstens einen Zentrierfortsatz 20 auf, der hier exemplarisch an einem Stegelement 28 ausgebildet ist. Der Zentrierfortsatz 20 ist axial in Richtung seiner Achse A_{ZL} verschieblich ausgebildet. In seiner Außengeometrie ist der Zentrierfortsatz 20 derart ausgebildet, dass er durch eine Ausnehmung 18 im Gabelschaft 6 von der Innenseite 12 zur Außenseite 16 des Gabelschafts 6 ragt. Darüber hinaus ist er derart ausgebildet, dass er in der Justierstellung von dieser Außenseite 16 hervorsteht (siehe Fig. 5). Sobald der Lenker-Vorbau 2 mit einer komplementär ausgeführten Zentrierausnehmung 30 in eine Zentrierposition bewegt wird (siehe Fig. 5, beispielsweise eine Fahrbetriebsposition), gleitet der Zentrierfortsatz 20 wenigstens teilweise in diese Zentrierausnehmung ein, sodass der Vorbau in dieser Justierposition justiert ist.

Erfindungsgemäß ist bei dieser Ausführungsform der Zentrierfortsatz 20 elastisch in Richtung der Justierstellung vorgespannt, er versucht also, in die Justierstellung zu gelangen.

Es ist denkbar und hier exemplarisch dargestellt, dass ein Zentrierfortsatz 20 an seinem zur Außenseite 16 ragenden Ende einen über die Längsachse A_{ZL} in seinem Durchmesser d abnehmenden Kopfbereich 22 aufweist. Optional ist dieser Kopfbereich abgerundet ausgebildet. Auch ist es denkbar, dass der Durchmesser des Kopfbereichs in einem Fußbereich 24 größer ist als die maximale Breite b der Zentrierausnehmung 30 und/oder in einem, insbesondere weiter Außen liegendem freien Endbereich 26 geringer ist als die minimale Breite b der Zentrierausnehmung. Maximale und minimal Breite sind dann gegeben, wenn die Zentrierausnehmung 30 beispielsweise als variabler Klemmspalt ausgeführt ist, wie dies hier exemplarisch gezeigt ist. Die Breite b kann hier optional über ein Klemmmittel und insbesondere eine Schraube 11 eingestellt werden, was zum Festklemmen des Lenker-Vorbaus 2 auf dem Gabelschaft 6 führt. Bei einer starren Zentrierausnehmung 30' entspricht die maximale Breite der minimalen Breite.

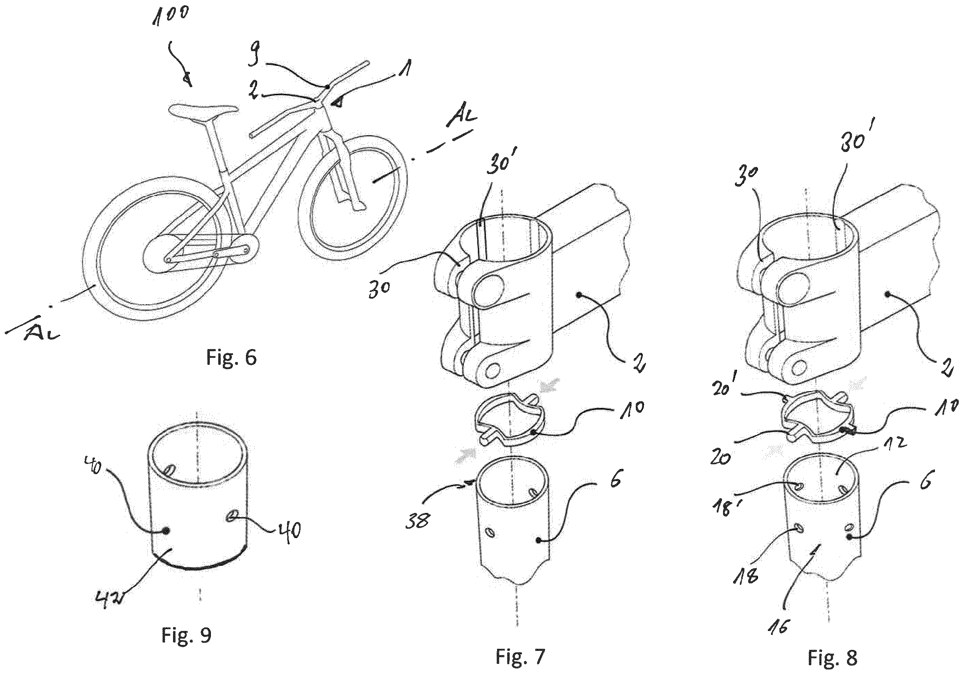

Fig. 6 zeigt eine weitere Ausführungsform des erfindungsgemäßen Fahrrads 100 bzw. der Steuereinrichtung 1, wobei hier der Lenker-Vorbau 2 bzw. ein daran befestigter Lenker 9 in eine Transportposition gedreht ist. Die Transportposition ist hier derart ausgebildet, dass sich der Lenker 9 im Wesentlichen entlang der Haupterstreckungsachse A_{L} bzw. der durch diese Achse vertikal aufgespannten Haupterstreckungsebene des Fahrrades erstreckt.

Zur Justierung des Lenker-Vorbaus 2 in dieser sogenannten Transportposition, kann der Lenker-Vorbau 2 beispielsweise eine Zentrierausnehmung 30' aufweisen, die im 90°-Winkel versetzt zur Zentrierausnehmung 30 angeordnet ist, die eine Fahrbetriebsposition definiert. Eine solche Ausführungsform zeigt Fig. 7.

Eine ähnliche Ausführung zeigt Fig. 8, bei der das Justierelement 10 eine Mehrzahl an Zentrierfortsätzen 20 aufweist, wobei wenigstens ein Zentrierfortsatz 20' versetzt zum Zentrierfortsatz 20, der eine Fahrbetriebsposition definiert, angeordnet ist. Der Zentrierfortsatz 20' ist hier exemplarisch um 90° versetzt zum Zentrierfortsatz 20 angeordnet. Komplementär dazu sind am Gabelschaft 6 Ausnehmungen 18 angeordnet, sodass die Zentrierfortsätze 20 vom Innenraum 12 zur Außenseite 16 des Gabelschafts ragen und damit unterschiedliche Justierpositionen definieren, die dann in bekannter Art und Weise in die wenigstens eine Zentrierausnehmung 30, und hier exemplarisch in zwei Zentrierausnehmungen 30, am Lenker-Vorbau 2 eingreifen.

Fig. 9 zeigt eine Ausführungsform der erfindungsgemäßen Montageschablone zur Montage eines Zentrierelements und insbesondere eines Zentrierelements der hier beschriebenen Art in einem Gabelschaft 6. Die Montageschablone ist optional auch geeignet zur Montage einer Steuereinrichtung wie sie hierin beschrieben ist auf einem Gabelschaft einer Vorderradgabel. Die Montageschablone 40 umfasst dazu ein Hülsenelement 42, dessen Innengeometrie komplementär zur Außengeometrie des Gabelschafts 6 ausgebildet und/oder auf diesen einstellbar ist. Hier kann beispielsweise die Montageschablone in ihrem Durchmesser veränderbar ausgebildet sein. Das Hülsenelement 42 ist über den Gabelschaft 6 stülpbar und auf einem bestimmten Höhenniveau einstellbar. Das bedeutet, dass das Hülsenelement entlang des Gabelschafts verschieblich auf dem Gabelschaft aufgenommen ist, um ein bestimmtes Höhenniveau festzulegen. Das Höhenniveau kann hier beispielsweise über entsprechende Anschlage oder Markierungen festlegbar sein. Beispielsweise kann eine Skala auf der Montageschablone und insbesondere dem Hülsenelement 42 vorgesehen sein. Auch ist es denkbar, am Hülsenelement ein entsprechendes Anschlagelement auszubilden, das bspw. an einem freien Ende 38 des Gabelschafts 6 (siehe Fig. 7) anschlägt und so ein Höhenniveau festlegt. Passend zu dem Höhenniveau weist die Hülse wenigstens eine Bohrschablone 44 auf, zum Einsetzen eines Bohrers oder dergleichen Ausnehmewerkzeugs (nicht dargestellt), um im Gabelschaft 6 wenigstens einen Lagersitz 14 auszubilden. Es ist auch denkbar, eine Mehrzahl an Bohrschablonen 44 vorzusehen oder entsprechende Markierungen auszubilden, um die Bohrschablonen an unterschiedlichen Positionen am Gabelschaft 6 zu montieren.

Die Beschreibung der vorliegenden Systeme und/oder Verfahren haben lediglich veranschaulichenden Charakter; sie ist nicht als eine Einschränkung der beiliegenden Ansprüche auf eine bestimmte Ausführungsform oder Gruppe von Ausführungsformen zu verstehen. Bei der Interpretation der beiliegenden Ansprüche gilt, dass das Wort "umfassend" das Vorhandensein anderer Elemente oder Aktionen als diejenigen, die in einem bestimmten Anspruch aufgeführt sind, nicht ausschließt; das Wort "ein" oder "einer/eine/eines", das einem Element vorausgeht, soll das Vorhandensein einer Mehrzahl solche Elemente nicht ausschließen; jegliche Bezugszeichen in den Ansprüchen schränken ihren Umfang nicht ein; mehrere "Mittel" können durch denselben Gegenstand bzw. unterschiedliche Gegenstände oder implementierte Struktur oder Funktion dargestellt werden; beliebige der offenbarten Vorrichtungen oder Teile davon können zusammen kombiniert werden oder in weitere Teile aufgeteilt werden, wenn nicht spezifisch anders angegeben. Die bloße Tatsache, dass bestimmte Maßnahmen in voneinander verschiedenen Ansprüchen aufgeführt werden, soll nicht angeben, dass eine Kombination dieser Maßnahmen nicht vorteilhafterweise eingesetzt werden kann. Insbesondere sollen alle funktionierenden Kombinationen der Ansprüche als inhärent offenbart betrachtet werden. In dieser Beschreibung sind Wörter wie "im Wesentlichen", "ungefähr" oder "im Allgemeinen/allgemein" dahingehend auszulegen, dass sie mindestens Abweichungen eines Maßes von 10 % oder weniger, vorzugsweise 5 % oder weniger, oder Abweichungen von einer Form beinhalten, die für einen Fachmann auf dem Gebiet noch in den Rahmen der betreffenden Definition fallen würden, außer dies ist anderweitig spezifiziert.

### Bezugszeichen

- 1: Steuereinrichtung
- 2: Lenker-Vorbau
- 3: Rahmen
- 4: Gabelschaftklemmung
- 5: Vorderrad
- 6: Gabelschaft
- 7: Hinterrad
- 8: Vorderradgabel
- 9: Lenker
- 10: Zentrierelement
- 11: Klemmmittel bzw. -schraube
- 12: Innenraum
- 14: Lagersitz
- 16: Pfeil
- 18: Ausnehmung bzw. Durchgangsbohrung
- 20: Zentrierfortsatz
- 22: Kopfbereich
- 24: Fußbereich
- 26: Freier Endbereich
- 28: Federelement
- 30: Zentrierausnehmung
- 32: Konkaves Stegelement
- 34: Konvexes Stegelement
- 36: Zentralausnehmung
- 38: Freies Ende
- 40: Montageschablone
- 42: Hülsenelement
- 44: Bohrschablone
- A_{ZL}: Achse
- As: Achse
- b: Breite

## Patentansprüche

1. Zentrierelement zur zentrierten Montage eines Lenker-Vorbaus (2) auf einem Gabelschaft (6) einer Vorderradgabel (8) eines Fahrrades (100) und zur Festlegung einer Orientierung des Lenker-Vorbaus relativ zur Fahrradlängsachse, der Vorbau (2) umfassend eine Gabelschaftklemmung (4) derart, dass er auf den Gabelschaft (6) aufschiebbar und dort festklemmbar ist, wobei das Zentrierelement (10) derart ausgebildet ist, dass es in den Innenraum (12) des Gabelschaftes (6) einführbar und dort in einem Lagersitz aufnehmbar ist, so dass es mit wenigstens einem Zentrierfortsatz (20) vom Innenraum (12) des Gabelschaftes (6) zu dessen Außenseite (16) und dort wenigstens teilweise in eine Zentrierausnehmung (30) des Vorbaus (2) ragt und dabei den Vorbau (2) in seiner Ausrichtung relativ zum Gabelschaft (6) justiert, wobei das Zentrierelement (10) wenigstens ein Federelement (28) aufweist, das mit dem Zentrierfortsatz (20) in Kraftkopplung steht und diesen (20) elastisch in die Justierstellung vorspannt, **dadurch gekennzeichnet, dass** das Zentrierelement (10) eine Zentralausnehmung (36) aufweist, die axial zur Gabelschaft-Achse (As) verläuft, zur Durchführung eines Axialbefestigungsmittels des Vorbaus.

2. Steuereinrichtung für ein Fahrrad (100), umfassend einen Lenker-Vorbau (2) mit einer Gabelschaftklemmung (4), der auf einen Gabelschaft (6) einer Vorderradgabel (8) eines Fahrrades (100) aufschiebbar und dort festklemmbar ist, weiter umfassend ein Zentrierelement nach Anspruch 1.

3. Steuereinrichtung nach Anspruch 2,
**dadurch gekennzeichnet, dass**
die Gabelschaftklemmung (4) einen optional variablen Klemmspalt (30) aufweist, der als Zentrierausnehmung (30) fungiert.

4. Steuereinrichtung nach Anspruch 2 oder 3,
**dadurch gekennzeichnet, dass**
der Lagersitz (14) durch wenigstens eine Ausnehmung (18), insbesondere eine Bohrung im Gabelschaft (6) gebildet wird, wobei
wenigstens ein Zentrierfortsatz (20) dazu komplementär derart ausgebildet ist, dass er die Ausnehmung (18) vom Innenraum (12) des Gabelschaftes (6) zu dessen Außenseite (16) durchdringt.

5. Steuereinrichtung nach einem der vorhergehenden Ansprüche 2 - 4,
**dadurch gekennzeichnet, dass**
wenigstens ein Zentrierfortsatz (20) in Bezug auf den Gabelschaft (6) radial verlaufend ausgebildet ist.

6. Steuereinrichtung nach einem der vorhergehenden Ansprüche 2 - 5,
**dadurch gekennzeichnet, dass**
wenigstens ein Teil des Zentrierfortsatzes (20) entlang seiner Längsachse A_{ZL} elastisch zwischen einer Freigabestellung und einer Justierstellung verschieblich ausgebildet ist.

7. Steuereinrichtung nach einem der vorhergehenden Ansprüche 2 - 6,
**dadurch gekennzeichnet, dass**
wenigstens ein Zentrierfortsatz (20) an seinem zur Außenseite (16) ragenden Ende einen über die Längsachse (A_{ZL}) in seinem Durchmesser (d) abnehmenden Kopfbereich (22), optional einen abgerundeten Kopfbereich aufweist, wobei optional der Durchmesser des Kopfbereiches in einem Fußbereich (24) größer ist als die maximale Breite (b) der Zentrierausnehmung (30), und/oder in einem freien Endbereich (26) geringer ist als die minimale Breite (b) der Zentrierausnehmung (30).

8. Steuereinrichtung nach einem der vorhergehenden Ansprüche 2 - 7,
**dadurch gekennzeichnet, dass**
das Zentrierelement (10) in seiner Außengeometrie wenigstens abschnittsweise komplementär zur Innengeometrie des Gabelschaftes (6) ausgebildet ist.

9. Steuereinrichtung nach einem der vorhergehenden Ansprüche 2 - 8,
**dadurch gekennzeichnet, dass**
das Zentrierelement (10) ein Gusselement ist.

10. Steuereinrichtung nach einem der vorhergehenden Ansprüche 2 - 9,
**dadurch gekennzeichnet, dass**
das Zentrierelement (10) eine Scheibengeometrie aufweist und optional wenigstens abschnittsweise mit einer ringförmigen Außengeometrie ausgebildet ist.

11. Steuereinrichtung nach einem der vorhergehenden Ansprüche 2 - 10,
**dadurch gekennzeichnet, dass**
das Zentrierelement (10) eine Außengeometrie mit konkaven Stegelementen (32) und konvexen Stegelementen (34) aufweist, die optional im Wechsel angeordnet sind.

12. Fahrrad, umfassend einen Fahrradrahmen (100) mit einer Vorderradgabel (8) und einer Steuereinrichtung gemäß einem der vorgenannten Ansprüche 2 - 11.

## Claims

1. Centring element for the centred assembly of a handlebar stem (2) on a fork steerer tube (6) of a front fork (8) of a bicycle (100) and for determining an orientation of the handlebar stem relative to the longitudinal axis of the bicycle, the stem (2) comprising a fork steerer tube clamp (4) in such a way that it can be pushed onto the fork steerer tube (6) and clamped there, wherein the centring element (10) is designed in such a way that it can be introduced into the interior (12) of the fork steerer tube (6) and there can be received in a bearing seat, so that the centring element protrudes, with at least one centring extension (20), from the interior (12) of the fork steerer tube (6) to its outer side (16) and there at least partially into a centring recess (30) of the stem (2), and thereby adjusts the orientation of the stem (2) relative to the steerer tube (6),
wherein the centring element (10) has at least one spring element (28) which is in force coupling with the centring extension (20) and elastically biases this (20) into the adjustment position, characterised inthat the centring element (10) has a central recess (36) which runs axially to the fork steerer tube axis (As) for the implementation of an axial fastening means for the stem.

2. Steering device for a bicycle (100), comprising a handlebar stem (2) with a fork steerer tube clamp (4) which can be pushed onto a fork steerer tube (6) of a front fork (8) of a bicycle (100) and can be clamped there, further comprising a centring element according to claim 1.

3. Steering device according to claim 2,
**characterised in that**
the fork steerer tube clamp (4) has an optionally variable clamping gap (30) which functions as a centring recess (30).

4. Steering device according to claim 2 or 3,
**characterised in that**
the bearing seat (14) is formed by at least one recess (18), in particular a bore in the fork steerer tube (6), wherein at least one centring extension (20) is designed to be complementary to the recess in such a way that it penetrates the recess (18) from the interior (12) of the fork steerer tube (6) to the outer side (16) thereof.

5. Steering device according to any one of the preceding claims 2-4,
**characterised in that**
at least one centring extension (20) is designed to run radially with respect to the fork steerer tube (6).

6. Steering device according to any one of the preceding claims 2-5,
**characterised in that**
at least part of the centring extension (20) is designed to be elastically displaceable between a release position and an adjustment position along its longitudinal axis A_{ZL}.

7. Steering device according to any one of the preceding claims 2-6,
**characterised in that**
at least one centring extension (20) at its end protruding towards the outer side (16) has a head region (22) which decreases in diameter (d) over the longitudinal axis (A_{ZL}), optionally a rounded head region, wherein optionally the diameter of the head region in a foot region (24) is greater than the maximum width (b) of the centring recess (30), and/or in a free end region (26) is less than the minimum width (b) of the centring recess (30).

8. Steering device according to any one of the preceding claims 2-7,
**characterised in that**
the centring element (10) is designed in its outer geometry to be at least partially complementary to the inner geometry of the fork steerer tube (6).

9. Steering device according to any one of the preceding claims 2-8,
**characterised in that**
the centring element (10) is a cast element.

10. Steering device according to any one of the preceding claims 2-9,
**characterised in that**
the centring element (10) has a disk geometry and is optionally designed at least in sections with an annular outer geometry.

11. Steering device according to any one of the preceding claims 2-10,
**characterised in that**
the centring element (10) has an outer geometry with concave web elements (32) and convex web elements (34), which are optionally arranged alternately.

12. Bicycle, comprising a bicycle frame (100) with a front fork (8) and a steering device according to any one of the aforementioned claims 2-11.

## Revendications

1. Élément de centrage pour le montage centré d'un avant-corps de guidon (2) sur un fourreau de fourche (6) d'une fourche de roue avant (8) d'une bicyclette (100) et pour la fixation d'une orientation de l'avant-corps de guidon par rapport à l'axe longitudinal de bicyclette, l'avant-corps (2) comprenant un serrage de fourreau de fourche (4) de telle sorte que ledit avant-corps puisse être coulissé sur le fourreau de fourche (6) et y être serré, dans lequel l'élément de centrage (10) est conçu de telle sorte qu'il puisse être inséré dans l'espace intérieur (12) du fourreau de fourche (6) et y être logé dans un siège de palier, de sorte qu'il fasse saillie avec au moins un prolongement de centrage (20) depuis l'espace intérieur (12) du fourreau de fourche (6) vers le côté extérieur (16) de celui-ci et là au moins partiellement jusque dans un évidement de centrage (30) de l'avant-corps (2) et ce faisant ajuste l'avant-corps (2) dans son alignement par rapport au fourreau de fourche (6),
dans lequel
l'élément de centrage (10) présente au moins un élément de ressort (28) qui se trouve en liaison de force d'accouplement avec le prolongement de centrage (20) et précontraint élastiquement celui-ci (20) jusque dans la position d'ajustement, **caractérisé en ce que** l'élément de centrage (10) présente un évidement central (36) qui se déroule axialement par rapport à l'axe de fourreau de fourche (A_{S}) pour la mise en œuvre d'un moyen de fixation axiale de l'avant-corps.

2. Dispositif de commande pour une bicyclette (100), comprenant un avant-corps de guidon (2) avec un serrage de fourreau de fourche (4), lequel avant-corps de guidon peut être coulissé sur un fourreau de fourche (6) d'une fourche de roue avant (8) d'une bicyclette (100) et y être solidement serré, comprenant en outre un élément de centrage selon la revendication 1.

3. Dispositif de commande selon la revendication 2,
**caractérisé en ce que**
le serrage de fourreau de fourche (4) présente une fente de serrage (30) variable optionnelle qui fait office d'évidement de centrage (30).

4. Dispositif de commande selon la revendication 2 ou 3,
**caractérisé en ce que**
le siège de palier (14) est formé par au moins un évidement (18), en particulier un alésage dans le fourreau de fourche (6), dans lequel
au moins un prolongement de centrage (20) est conçu en complément pour traverser l'évidement (18) depuis l'espace intérieur (12) du fourreau de fourche (6) vers le côté extérieur (16) de celui-ci.

5. Dispositif de commande selon l'une des revendications précédentes 2-4,
**caractérisé en ce que**
au moins un prolongement de centrage (20) est conçu de manière à se dérouler radialement par rapport au fourreau de fourche (6).

6. Dispositif de commande selon l'une des revendications précédentes 2-5,
**caractérisé en ce que**
au moins une partie du prolongement de centrage (20) est conçue de façon coulissante le long de son axe longitudinal A_{ZL}, de façon élastique entre une position de libération et une position d'ajustement.

7. Dispositif de commande selon l'une des revendications précédentes 2-6,
**caractérisé en ce que**
au moins un prolongement de centrage (20) présente, au niveau de son extrémité faisant saillie vers le côté extérieur (16), une zone de tête (22) s'amenuisant dans son diamètre (d) par-dessus l'axe longitudinal (A_{ZL}), optionnellement une zone de tête arrondie, dans lequel optionnellement le diamètre de la zone de tête est supérieur à la largeur (b) maximale de l'évidement de centrage (30) dans une zone de pied (24), et/ou est moindre que la largeur (b) minimale de l'évidement de centrage (30) dans une zone d'extrémité (26) libre.

8. Dispositif de commande selon l'une des revendications précédentes 2-7,
**caractérisé en ce que**
l'élément de centrage (10) dans sa géométrie extérieure est conçu au moins par endroits de façon complémentaire à la géométrie intérieure du fourreau de fourche (6).

9. Dispositif de commande selon l'une des revendications précédentes 2-8,
**caractérisé en ce que**
l'élément de centrage (10) est un élément de moulage.

10. Dispositif de commande selon l'une des revendications précédentes 2-9,
**caractérisé en ce que**
l'élément de centrage (10) présente une géométrie de rondelle et est optionnellement conçu au moins par endroits avec une géométrie extérieure annulaire.

11. Dispositif de commande selon l'une des revendications précédentes 2-10,
**caractérisé en ce que**
l'élément de centrage (10) présente une géométrie extérieure avec des éléments de traverse concaves (32) et des éléments de traverse convexes (34), qui sont optionnellement agencés en alternance.

12. Bicyclette, comprenant un cadre de bicyclette (100) avec une fourche de roue avant (8) et un dispositif de commande selon l'une des revendications précédentes 2-11.
